(19) Europäisches Patentamt
European Patent Office
Office européen des brevets

(11) **EP 0 625 715 B1**

(12) **EUROPÄISCHE PATENTSCHRIFT**

(45) Veröffentlichungstag und Bekanntmachung des Hinweises auf die Patenterteilung:
**19.08.1998 Patentblatt 1998/34**

(51) Int Cl.⁶: **G01S 15/10**

(21) Anmeldenummer: **93120886.2**

(22) Anmeldetag: **24.12.1993**

(54) **Verfahren zum Erkennen von Zielen und/oder Bestimmen ihrer Zieldaten**

Method for target recognition and/or for determination of target data

Procédé de reconnaissance de cibles et/ou pour déterminer des données des cibles

(84) Benannte Vertragsstaaten:
**DE FR GB IT**

(30) Priorität: **21.05.1993 DE 4317038**

(43) Veröffentlichungstag der Anmeldung:
**23.11.1994 Patentblatt 1994/47**

(73) Patentinhaber: **STN ATLAS Elektronik GmbH**
**28309 Bremen (DE)**

(72) Erfinder:
 • **Rosenbach, Karlhans, Ing.Grad.**
 **D-53225 Bonn (DE)**
 • **Ziegenbein, Jochen, Dr.**
 **D-53359 Rheinbach (DE)**

(56) Entgegenhaltungen:
| | |
|---|---|
| EP-A- 0 282 265 | EP-A- 0 504 702 |
| EP-A- 0 534 069 | GB-A- 2 184 236 |
| US-A- 3 427 617 | US-A- 4 053 889 |
| US-A- 4 470 048 | US-A- 4 998 224 |
| US-A- 5 077 702 | |

 • PATENT ABSTRACTS OF JAPAN vol. 14, no. 92 (P-1009) 20. Februar 1990 & JP-A-01 299 485 (NEC CORP.) 4. Dezember 1989
 • PATENT ABSTRACTS OF JAPAN vol. 17, no. 461 (P-1598) 23. August 1993 & JP-A-05 107 349 (MITSUBISHI EL. CORP.) 27. April 1993

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Erkennen von Zielen und/oder Bestimmen ihrer Zieldaten der im Oberbegriff des Anspruchs 1 genannten Art.

In Radar- und Sonaranlagen werden Festziele und bewegte Ziele erkannt und geortet, indem ein Sendeimpuls ausgesendet und vom Ziel reflektierte Anteile richtungsselektiv empfangen werden. Die Empfangssignale werden bezüglich Laufzeit zwischen Senden und Empfangen und Frequenzverschiebung zwischen Sende- und Empfangsfrequenz aufgrund des Dopplereffekts ausgewertet, um Entfernung und Bewegung des Ziel bzw. seine Geschwindigkeit in Richtung zum Empfangsort zu ermitteln.

Da die Dopplerverschiebung sowohl in die Entfernungs- wie auch in die Geschwindigkeitsbestimmung eingeht, wird die Signalform des Sendesignals abhängig von der Aufgabenstellung gewählt. Sendeimpulse mit kontinuierlichen Wellen einer einzigen Frequenz, sog. CW-Impulse, werden verwendet, wenn die Geschwindigkeitsmessung im Vordergrund steht. Ihre Genauigkeit ist abhängig von der Impulslänge und nimmt mit steigender Impulslänge zu. Sendeimpulse mit linear frequenzmodulierten Wellen, sog. LFM-Impulse sind weniger dopplerempfindlich und besser geeignet für die Entfernungsmessung, deren Genauigkeit mit steigender Bandbreite zunimmt.

Zum Bestimmen von Entfernung und Geschwindigkeit werden Referenzsignale verwendet, die aus dem Sendeimpuls durch Frequenz- und Zeitverschiebung abgeleitet werden. Abhängig von der Entfernungs- und Geschwindigkeitsauflösung ist die Anzahl der Referenzsignale, die zum Vergleich mit dem Empfangssignal abgespeichert werden. Stimmen Empfangssignal und Referenzsignal exakt überein, so gibt Zeitverschiebung und die entsprechend dem Dopplereffekt vorgenommene Frequenzverschiebung des Referenzsignals die Entfernung und Geschwindigkeit des Ziels in Richtung zum Empfangsort an. Durch Korrelation des Empfangssignals mit sämtlichen Referenzsignalen wird die Entfernung und Geschwindigkeit ermittelt. Das Korrelationsergebnis weist ein Maximum auf, wenn Empfangs- und Referenzsignal identisch sind. Abweichungen führen zu einer Verringerung dieses Wertes. Die Abhängigkeit der Zeit- und Frequenzabweichung zwischen Empfangssignal und Referenzsignal, d.h. der Entfernungs- und Geschwindigkeitsfehler für das Korrelationsergebnis sind als sog. Ambiguity-Funktion in einer Zeit-Frequenz-Ebene oder Entfernungs-Geschwindigkeits-Ebene darstellbar. Die Ambiguity-Funktion weist beim Fehler "Null", also im Ursprung der Zeit-Frequenz-Ebene, ihr Maximum auf und wird abhängig von der gewählten Signalform des Sendeimpulses bei Frequenz- oder Zeitabweichungen kleiner.

Die Ambiguity-Funktion eines CW-Impulses großer Impulslänge weist die Form eines Messerrückens entlang der Entfernungsachse auf, d.h. der CW-Impuls liefert immer den Maximalwert der Ambiguity-Funktion, wenn die Frequenz des Referenzsignals gleich der dopplerverschobenen Frequenz des Empfangssignals ist oder eine geringe Abweichung aufweist. Zeitverschiebungsfehler hingegen führen nicht zu einem steilen Abfall des Wertes der Ambiguity-Funktion. Der CW-Impuls liefert also eine gute Geschwindigkeitsauflösung (vgl. z. B. "Radar Handbook", M. I. Skolnik, McGraw-Hill Book Company, 1970, 3-17 und 3-20), die um so größer ist, je größer die Impulslänge ist.

Zur Erzielung großer Reichweiten sind große Impulslängen notwendig. Sendeimpulse in Form von CW-Impulsen sind dann für Entfernungsmessungen ungeeignet. Für diese Aufgabe wären Sendeimpulse mit linear frequenzmodulierten Wellen, sog. LFM-Impulse, besser geeignet. Ihre Ambiguity-Funktion weist ebenfalls die Form eines Messerrückens auf, der jedoch in der Zeit-Frequenz-Ebene gegenüber der Ambiguity-Funktion des CW-Impulses zur Frequenzachse hin gedreht ist und zur Zeit-Achse einen Winkel einschließt, so daß auch bei Referenzsignalen, die eine größere Frequenzabweichung gegenüber dem Empfangssignal aufweisen, eine Entfernungsmessung mit geringem Fehler möglich ist.

In dem Buch "Principles of High-Resolution Radar", A. W. Rihaczek, McGraw-Hill Book Company, 1969, Seite 184, wird angegeben, daß Breite und Drehung des Messerrückens der Ambiguity-Funktion in der Zeit-Frequenz-Ebene dadurch beeinflußbar sind, daß während der Impulslänge die Sendefrequenz nicht linear über der Zeit, sondern quadratisch oder kubisch ansteigt. Je größer der Exponent desto mehr flacht der Rücken der Ambiguity-Funktion ab und dreht zur Frequenz-Achse hin, so daß zugelassene Frequenzabweichungen zwischen Empfangssignal und Referenzsignal noch weiter vergrößert werden können, ohne daß die Entfernungsmessung größere Fehler aufweist. Eine weitere Vergrößerung des Exponenten über einen quadratischen oder kubischen Verlauf der Sendefrequenz über der Zeit hinaus bringt jedoch keinen weiteren Gewinn. Die mit einem solchen Sendeimpuls erzielbare Empfindlichkeit der Geschwindigkeitsmessung ist wesentlich geringer als beim linear frequenzmodulierten Impuls, die Empfindlichkeit der Entfernungsmessung hingegen größer.

Um sowohl bei der Entfernungs-, wie auch bei Geschwindigkeitsbestimmungen gleiche Auflösungen zu erhalten, werden beispielsweise Impulszüge verwendet, die von Impuls zu Impuls wechselnde Mittenfrequenzen und Frequenz- oder Phasenmodulationen aufweisen und nach einem Zufalls-Code gewählt werden. Das Zentralmaximum ihrer Ambiguity-Funktion wird mit einer Heftzwecke im Ursprung der Zeitfrequenzebene verglichen und heißt Thumbtack-Ambiguity-Function.

Der Aufwand bei der Auswertung solcher Impulszüge mit Referenzsignalen ist wesentlich größer als bei einem ausgesendeten CW-Impuls oder frequenzmodulierten Impuls, da das Zeit- und Frequenzraster abhängig von der notwendigen großen Bandbreite und Impulsdauer für die Referenzsignale sehr fein gewählt werden muß, um durch Mustervergleich überhaupt ein Korrelationsergebnis zu bekommen, also das Maximum der Ambiguity-Funktion zu erhalten.

Der Vergleich von Empfangssignal mit dopplerfrequenzverschobenen Referenzsignalen wird in sogenannten Dopplerkanälen durchgeführt. Je höher die Auflösung der Bestimmung von Geschwindigkeit und Entfernung gefordert wird, desto größer müssen Bandbreite und Impulslänge des Sendeimpulses und die Anzahl der Dopplerkanäle und damit der bereitzustellenden Referenzsignale für die Korrelation gewählt werden.

Aus der englischen Patentanmeldung GB-A 21 84 236 ist ein Verfahren bekannt, bei dem zur Grobunterscheidung der Geschwindigkeit eines Ziels ein kurzer Impuls mit geringer Bandbreite mit einem frequenzmodulierten Wellenzug ausgesendet und mit Referenzsignalen gleicher Impulslänge korreliert wird und anschließend zur genaueren Geschwindigkeitsbestimmung ein zweiter Impuls größerer Bandbreite und längerer Impulsdauer ausgesendet und mit entsprechenden Referenzsignalen korreliert wird. Bei Aussenden nur eines Impulses vorgebbarer Impulsdauer wird für die Grobbestimmung ein kurzes Signalstück des Empfangssignals mit Referenzsignalen kurzer Dauer durch Korrelation daraufhin untersucht, ob der Frequenzverlauf dieses Signalstücks eine positive, negative oder gar keine Dopplerverschiebung erfahren hat. Für die Feinbestimmung wird das Ergebnis dieser Untersuchung zur Auswahl von Referenzsignalen mit einer Impulslänge, die gleich der gesamten Impulsdauer ist, verwendet. Die Geschwindigkeitsbestimmung ist durch die Vergrößerung des Zeitbandbreitenprodukts sehr genau.

Es ist Aufgabe der vorliegenden Erfindung, ein Verfahren der im Oberbegriff genannten Art zu schaffen, das es gestattet, bei gleichem Aufwand wie bei Sendeimpulsen mit linear frequenzmodulierten Wellen die Geschwindigkeitsauflösung zu erhöhen, ohne daß die Impulslänge vergrößert wird.

Diese Aufgabe wird erfindungsgemäß durch die im Kennzeichenteil des Anspruchs 1 genannten Merkmale gelöst.

Die Sendefrequenz wird während der Impulsdauer proportional einer Potenz der Zeit verändert, deren Exponent kleiner als "1" ist, beispielsweise entsprechend dem Verlauf der Wurzelfunktion erhöht. Dann hat der Exponent der irrationalen Funktion, die den Verlauf der Sendefrequenz über der Zeit angibt, den Wert $\alpha = \frac{1}{2}$. Die zugehörige Ambiguity-Funktion weist gegenüber der Ambiguity-Funktion eines LFM-Impulses, eines sog. linear frequenzmodulierten Impulses, gleicher Impulslänge und Bandbreite in der Zeit-Frequenz-Ebene einen Rücken auf, der einen geringeren Winkel zur Zeitachse einschließt und wesentlich schmaler und in seiner Längsrichtung auch kürzer ist. Die Ambiguity-Funktion hat die Form eines Berggipfels. Ein Schnitt durch die Ambiguity-Funktion in der Zeit-Frequenz-Ebene senkrecht zur Zeitachse ergibt einen Verlauf der Maxima der Ambiguity-Funktion über der Frequenz im Frequenzbereich der Dopplerverschiebung mit sehr ausgeprägtem absolutem Maximum in demjenigen Dopplerkanal, der der Geschwindigkeit des Ziels entspricht. Der Verlauf der Maxima der zu einem LFM-Impuls gehörenden Ambiguity-Funktionen ist demgegenüber wesentlich flacher. Dieser Sendeimpuls ermöglicht neben einer guten Entfernungsmessung eine genauere Geschwindigkeitsmessung als der LFM-Impuls bei gleicher Impulslänge, da die Sendefrequenz nicht linear, sondern zu Beginn des Sendeimpulses schnell und anschließend langsamer über der Zeit ansteigt.

Der Rücken der Ambiguity-Funktion in der Zeit-Frequenz-Ebene als Darstellungsebene wird ausgehend von der Form des LFM-Impulses um so weiter zur Zeit- oder Entfernungsachse gedreht, je kleiner der Wert $\alpha$ [$1<\alpha<0$] gewählt wird. Die Sendefrequenz steigt dann zeitlich schneller auf ihren Maximalwert, so daß der Sendeimpuls von der Gestalt des LFM-Impulses immer mehr abweicht und bei sehr kleinen Werten von $\alpha$ die Gestalt eines CW-Impulses am Ende seiner Impulslänge aufweist. Dies hat zur Folge, daß der Rücken der Ambiguity-Funktion sich weiterhin zur Zeitachse dreht und die Dopplerempfindlichkeit weiter erhöht wird. Die gleichzeitige geringe Abnahme der Entfernungsmeßgenauigkeit im Dopplerkanal mit dem absoluten Maximum der Ambiguity-Funktion mit kleiner werdendem Wert $\alpha$ ist tolerierbar, da die effektiv wirksame Bandbreite nur gering abnimmt, die die Entfernungsauflösung bestimmt.

Der besondere Vorteil des erfindungsgemäßen Verfahrens bei einer Anwendung in der Wasserschalltechnik besteht darin, daß schon mit einem einzigen Sendeimpuls, dessen Bandbreite durch die Dimensionierung der Sende-Empfangsanlage und dessen Impulslänge durch die gewünschte Reichweite vorgegeben sind, die Genauigkeit der Entfernungs- und Geschwindigkeitsmessung ohne Erhöhung des Aufwands an Dopplerkanälen einzig durch den Wert $\alpha$ für die Modulation des Wellenzugs im Sendeimpuls eingestellt wird. Besonders vorteilhaft ist dabei, daß durch die Bandbreite der Nachhall so klein und die Entfernungsauflösung so groß wie möglich gemacht werden kann. Von besonderem Vorteil ist, daß die strenge Kopplung der Rasterung der Dopplerkanäle an die Impulslänge und damit eine Erhöhung der Anzahl der Dopplerkanäle bei Vergrößerung der Impulslänge nicht mehr notwendig ist. Der Wert $\alpha$ wird für längere Sendeimpulse ebenfalls erhöht und die Dopplerempfindlichkeit bleibt bei gleicher Anzahl an Dopplerkanälen erhalten. Weiterhin ist von Vorteil, daß in kürzester Zeit, nämlich nach nur einem Sendeimpuls, Ziele detektiert und ihre Zieldaten bestimmt werden können. Der Eigenverrat ist so gering wie möglich, da fremde Sonaranlagen zur Detektion und Klassifizierung auch nur einen Sendeimpuls empfangen.

Weiterhin ist es besonders vorteilhaft, daß für eine Entfernungs- und Geschwindigkeitsmessung nur ein einziges Empfangssignal ausreicht, weil auch dann eine Messung gewährleistet ist, wenn durch schlechte Signalausbreitungsverhältnisse nur ein einziges Empfangssignal von einer Serie von ausgesendeten Sendesignalen zur Verfügung steht.

Der Vorteil des erfindungsgemäßen Verfahrens nach Anspruch 1 besteht weiterhin darin, daß durch die Wahl des Wertes $\alpha$ des Exponenten zwischen dem Wert 0 und 1 ohne Änderung der Anzahl der Dopplerkanäle der Dopplerbereich und eine dazu passende Dopplerempfindlichkeit der Sende-/Empfangsanlage einstellbar sind. Für sehr kleine Werte von $\alpha$ ist die Dopplerempfindlichkeit sehr groß. Der Verlauf der Maxima der Ambiguity-Funktion weist ein stark ausgeprägtes absolutes Maximum auf, so daß der Dopplerkanal, der die Geschwindigkeit des Ziels mit dem kleinsten Fehler angibt, deutlich erkennbar ist. Diese Eigenschaft ist besonders dann von Vorteil, wenn bestimmte Geschwindigkeitswerte besonders charakteristisch für eine Klassifizierung des Ziels sind. Auch bei einer geringen Anzahl von Dopplerkanälen können z. B. Festziele von bewegten Zielen sicher getrennt werden, auch wenn sie unter der gleichen Peilung auftreten, da der Dopplerkanal, dessen Referenzsignal gleich dem Sendesignal ist, sich deutlich durch sein absolutes Maximum von seinen benachbarten Dopplerkanälen abhebt.

Wenn Ziele mit unterschiedlichen Geschwindigkeiten unter unterschiedlichen Peilungen grob geortet worden sind, ist durch eine Verkleinerung des Werts $\alpha$ für den nächsten Sendeimpuls, der anschließend richtungsselektiv in die Richtung des reflektierenden Ziels gesendet wird, und in seiner Impulslänge abhängig von der Entfernung zum Ziel optimal angepaßt wird, eine genauere Entfernungs- und Geschwindigkeitsbestimmung möglich. Besonders vorteilhaft ist es, daß dieses Ergebnis mit der gleichen Anzahl von Dopplerkanälen, die mit entsprechenden Referenzsignalen zur Krrelation mit dem Empfangssignal gespeist werden, erzielt wird. Auch eine Verkleinerung der Impulslänge führt bei entsprechender Verkleinerung des Wertes $\alpha$ nicht zu einer Verschlechterung der Frequenzauflösung und damit der Dopplerempfindlichkeit. Einzig und allein müssen entsprechende Referenzsignale für unterschiedliche Werte von $\alpha$ zur Verfügung gestellt werden, um bei gleichem Rechenaufwand in den Dopplerkanälen eine Verbesserung der Ortung des Ziels zu erreichen.

Nach einer vorteilhaften Weiterbildung des Verfahrens nach Anspruch 2 ist mit nur einem einzigen Sendeimpuls eine sichere Detektion sowohl von Festzielen wie auch von Zielen, die sich mit sehr unterschiedlichen Geschwindigkeiten bewegen, möglich. Das Sendesignal besteht aus mehreren aneinandergereihten Impulslängen, deren Sendefrequenzen unterschiedliche zeitliche Verläufe aufweisen. Beispielsweise ist in der ersten Impulslänge die Sendefrequenz linear ansteigend gewählt. Mit diesem Teil des Sendesignals ist eine sehr genaue Entfernungsbestimmung möglich, die durch die Bandbreite des Sendeimpulses bestimmt ist.

In den darauffolgenden Impulslängen folgt die Sendefrequenz irrationalen Funktionen mit unterschiedlichen Werten $\alpha$ des Exponenten. Entsprechende Referenzsignale, mit Dopplerverschiebungen werden für die Auswertung in den einzelnen Dopplerkanälen berechnet und abgespeichert. Beim Empfang wird das Empfangssignal jeder Richtcharakteristik mit den abgespeicherten Referenzsignalen verglichen. Mit dem ersten Teil des Empfangssignals wird die Entfernung bestimmt, mit dem darauffolgenden Teil Ziele mit sehr unterschiedlichen Geschwindigkeiten erkannt und ihre Geschwindigkeit mit kleinstem Fehler bestimmt. Der besondere Vorteil eines solchen Sendesignals besteht darin, daß mit nur einem einzigen Sendeimpuls eine mit geringstem Fehler behaftete Entfernungsmessung und stets mit der gleichen Anzahl von Dopplerkanälen eine grobe und feine Geschwindigkeitsmessung möglich ist, ohne daß der Aufwand an Signalauswertung steigt. Es müssen nur entsprechende Muster von Referenzsignalen vorher berechnet und abgespeichert werden. Besonders vorteilhaft ist, daß die jeweilige Impulslänge und der Wert des Exponenten im Betrieb variiert werden können, je nachdem, wie die Zielsetzung der Detektion, Ortung und Klassifizierung lautet.

In der US-PS 4 998 224 ist ein Sendeimpuls aus mehreren Impulslängen mit linear frequenzmodulierten Impulsstücken unterschiedlicher Mittenfrequenz beschrieben, die nach einem Zufallscode aneinandergereiht sind. Die dort erzielten Vorteile, z.B. Verringerung des Eigenverrats und der Störung durch fremde Anlagen sowie Verbesserung der Empfangsfähigkeit von befreundeten Anlagen, sind mit der Weiterbildung nach Anspruch 2 dann erzielbar, wenn der Sendeimpuls zerlegt wird und vorher benachbarte Impulsabschnitte verwürfelt aneinandergereiht werden.

Besonders vorteilhaft ist es gemäß der erfindungsgemäßen Weiterbildung des Verfahrens nach Anspruch 3, einen sehr kleinen Wert von $\alpha$ zu wählen, wenn bei den Zielen zwischen Festzielen und Bewegtzielen unterschieden werden soll, weil geringe Geschwindigkeitsabweichungen in benachbarten Dopplerkanälen bereits eine deutliche Abnahme des Pegelverlaufs der Maxima der Ambiguity-Funktionen vom absoluten Maximum im Doppler-Null-Kanal hervorrufen. Wenn jedoch innerhalb eines großen Geschwindigkeitsbereichs, z. B. von ±30 kn in der Wasserschalltechnik, eine Unterscheidung zwischen schnellen und langsamen Wasserfahrzeugen und eine Bestimmung ihrer Geschwindigkeit gefordert ist, so wird man einen wesentlich größeren Wert von $\alpha$ wählen, beispielsweise $\alpha = \frac{1}{2}$, um hier die bewegten Ziele zu detektieren und ihre Zieldaten zu bestimmen.

Besteht die Aufgabenstellung darin, weit entfernte, bewegte Ziele zu erkennen, so ist es besonders vorteilhaft, bei großen Impulslängen entsprechend der Weiterbildung des erfindungsgemäßen Verfahrens nach Anspruch 4 den Wert $\alpha$ des Exponenten größer als $\alpha = \frac{1}{2}$ zu wählen, da durch die wachsende Impulslänge die Dopplerempfindlichkeit größer wird als bei kürzeren Sendeimpulsen und somit gleiche Auflösung durch Anpassung an die Impulslänge erzielt wird. Auch hier ist wieder eine Berechnung und Abspeicherung von Referenzsignalen für unterschiedliche Impulslängen und unterschiedliche Werte $\alpha$ notwendig, um das Empfangssignal mit den gleichen Dopplerkanälen auswerten zu können. Der besondere Vorteil besteht darin, daß die Anpassung allein durch die Formgebung des Sendesignals und der Referenzsignale erreicht wird.

Die Anzahl der Referenzsignale für jeden Wert $\alpha$ wird gemäß der vorteilhaften Weiterbildung des erfindungsgemäßen Verfahrens nach Anspruch 5 begrenzt durch die Anzahl der zur Verfügung gestellten Dopplerkanäle. Der besondere Vorteil besteht darin, daß die Form des Sendesingals abhängig vom Wert $\alpha$ die Genauigkeit der Entfernungs- und Geschwindigkeitsbestimmungen festlegt. Sämtliche zur Verfügung gestellten Dopplerkanäle werden bei jeder Messung ausgenutzt. Diese Dopplerkanäle führen die Korrelationen des Empfangssignals mit den Referenzsignalen beispielsweise im Zeitbereich durch. Ebenso vorteilhaft ist es möglich, die Korrelation im Frequenzbereich durchzuführen, dann müssen Empfangssignale und Referenzsignale einer Fourier-Transformation unterworfen werden, um sie von den Zeit- in den Frequenzbereich zu transformieren, und das Ergebnis der Korrelation wieder vom Frequenzbereich in den Zeitbereich rücktransformiert werden. Dies ist besonders dann vorteilhaft, wenn die gesamte Signalverarbeitung der Sende-/ Empfangsanlage digital im Frequenzbereich erfolgt, so auch z.B. das Bilden der Richtcharakteristiken im Richtungsbildner.

In jedem Dopplerkanal wird das Empfangssignal der Richtcharakteristik mit einem der Referenzsignale korreliert. Wenn Empfangssignal und Referenzsignal gleiche Dopplerverschiebung aufweisen, liefert das Ausgangssignal dieses Dopplerkanals das absolute Maximum. Weicht der Frequenzverlauf zwischen Empfangssignal und Referenzsignal ab, so liefert dieser Dopplerkanal ein geringeres Maximum seiner Ambiguity-Funktion. Die Maxima nehmen ab, je größer der Frequenzunterschied zwischen Referenzsignal und Empfangssignal ist. Der Dopplerkanal, dessen Ausgangssignal das absolute Maximum der Ambiguity-Funktionen aufweist, ist der Dopplerkanal der die Geschwindigkeit des Ziels angibt, die aus der Dopplerverschiebung des Referenzsignals berechenbar ist. Um das absolute Maximum festzustellen, werden die Ausgangssignale der Dopplerkanäle abgespeichert und miteinander verglichen.

Besonders vorteilhaft entsprechend der Weiterbildung des erfindungsgemäßen Verfahrens nach Anspruch 6 ist es, den Pegelverlauf der Maxima der Ambiguity-Funktion an den Ausgängen der Dopplerkanäle entlang einer Geschwindigkeitsachse farbig darzustellen, wobei jedem Pegelwert eine Farbe zugeordnet wird. Niedrige Pegelwerte werden mit dunklen Farben, hohe Pegelwerte mit hellen Farben angezeigt, beispielsweise von Lila, Blau, Grün, Gelb nach Weiß, und das absolute Maximum mit einer roten Farbkennung versehen. In einem vorgebbaren Zeitraster, das abhängig von einer Entfernungsauflösung unter Berücksichtigung der Bandbreite gewählt wird, werden nacheinander längs einer senkrecht zur Geschwindigkeitsachse verlaufenden Entfernungsachse die farbigen Pegelverläufe der Maxima der Ambiguity-Funktionen dargestellt, wobei jedem Zeitintervall ein Entfernungsintervall entspricht. Die Achsen dieser Darstellungsebene werden mit Entfernungs- und Geschwindigkeitswerten skaliert. So entstehen Höhenlinien der Ambiguity-Funktionen durch die Farbigkeit der Anzeige, und Ziele sind durch ihre farbige Struktur besonders einfach zu detektieren und ihre Entfernung und Geschwindigkeit zu bestimmen. Man erhält einen sehr guten Überblick über Zielstrukturen, die durch mehrere Reflexionszentren verursacht werden, und die Möglichkeit, Mehrwegeausbreitungen des Sendesignals zum Reflexionsort und zurück zu erkennen.

Besonders vorteilhaft ist es, einen Frequenz- und Zeitbereich für die Darstellungsebene vorzugeben. Der Frequenzbereich richtet sich nach dem interessierenden Geschwindigkeitsbereich möglicher Ziele und ist durch die möglichen Dopplerfrequenzen vorgegeben. Der Zeitbereich wird abhängig vom zu untersuchenden Entfernungsbereich vorgegeben.

Jede Ortungsanlage weist eine Lagedarstellung der georteten Ziele auf. Bei der Ortung werden vom Ziel reflektierte Anteile des Sendeimpulses richtungsselektiv empfangen. Jedem Empfangssignal ist eine Peilrichtung zuzuordnen. Die Zeit zwischen Senden und Empfangen gibt die Entfernung zum Ziel an, die Frequenzverschiebung im Empfangssignal gegenüber dem Sendeimpuls ist ein Maß für die Geschwindigkeit.

In der Lagedarstellung, beispielsweise als PPI-Darstellung, sind sämtliche von der Ortungsanlage erfaßten Ziele bezüglich Peilung und Entfernung dargestellt. Besonders vorteilhaft ist es, wenn nach einer Weiterführung des erfindungsgemäßen Verfahrens nach Anspruch 7 der Frequenz- und Zeitbereich aus der Lagedarstellung der Ortungsanlage entnommen wird. Mit einem Cursor wird ein bestimmtes Zielgebiet eingekreist, das dann zur näheren Untersuchung des Ziels bezüglich Geschwindigkeit und Entfernung in der vorher beschriebenen Darstellungsebene farbig angezeigt wird. Der Vorteil dieser Auswahl eines Zielgebiets aus der Lagedarstellung besteht insbesondere darin, daß die Klassifizierung eines besonders interessierenden Ziels schnell und sicher erfolgen kann, um notwendige taktische Maßnahmen unverzögert einzuleiten. Da weiterhin auf der Lagedarstellung ein Überblick über die Gesamtsituation gegeben ist, kann auf Lageänderungen schnell reagiert werden. Eine gleichzeitige genauere Klärung des ausgewählten Ziels mit Hilfe des Farbschriebs führt nicht zu einer Informationseinbuße über die Gesamtlage.

Zur näheren Zielaufklärung wird nach einer vorteilhaften Weiterbildung des erfindungsgemäßen Verfahrens nach Anspruch 8 das farbig gekennzeichnete absolute Maximum der Ambiguity-Funktion in der Darstellungsebene aufgesucht und beispielsweise mit einem Cursor ein Schnitt durch die Darstellungsebene senkrecht zur Zeitachse gelegt. Die Maxima der Ambiguity-Funktion aller Dopplerkanäle zu diesem Zeitpunkt werden seitlich von der Darstellungsebene über der Geschwindigkeitsachse angezeigt. Dieser Pegelverlauf weist ein ausgeprägtes absolutes Maximum an der Stelle auf, die die Geschwindigkeit des Ziels an der Geschwindigkeitsskala markiert. An der Breite des Maximums ist der Fehler der Geschwindigkeitsmessung unmittelbar abzulesen. Je steiler das absolute Maximum sich heraushebt, desto geringer ist bei gleichem Nutz-/Störverhältnis der Fehler der Geschwindigkeitsmessung. Ein Schnitt parallel zur Zeitachse gemäß der Weiterbildung nach Anspruch 9 gibt den Verlauf der Maxima der Ambiguity-Funktion über der Zeit an. Auch hier ist an dem Entfernungswert, der zu dem Geschwindigkeitswert des Ziels gehört, ein absolutes Maximum zu erkennen, und eine Bewertung der Entfernungsmessung möglich. Der Pegelverlauf über der Geschwindigkeit steht zu ein und demselben Zeitpunkt an den Ausgängen der Dopplerkanäle an. Der zeitliche Pegelverlauf der Ambiguity-Funktion am Ausgang eines Dopplerkanals wird dadurch erhalten, daß innerhalb des vorgebbaren Zeitbereichs sämtliche Verläufe der Ambiguity-Funktionen über der Zeit abgespeichert werden und dann zur Anzeige aus dem Speicher abgerufen werden. Der Vorteil dieser Darstellung besteht insbesondere darin, daß eine Bewertung des Meßergebnisses bezüglich Geschwindigkeit und Entfernung unmittelbar ablesbar ist.

Bei dem vorteilhaften Weiterbildungen des erfindungsgemäßen Verfahrens nach Anspruch 10 und 11 wird der farbig dargestellte Frequenz-/Zeitbereich auf das Vorhandensein von Zielen untersucht, wenn die Farbstruktur Zweifel darüber läßt, ob überhaupt ein Ziel vorliegt. Dazu werden entfernungsunabhängig bzw. zeitunabhängig das jeweils größte Ausgangssignal jedes Dopplerkanals als Pegelschrieb über der Geschwindigkeitsachse dargestellt. Ein zweiter Pegelschrieb über der Entfernungsachse zeigt unabhängig vom Dopplerkanal das jeweils größte Ausgangssignal in jedem Zeitinkrement. Es entstehen zwei Pegelschriebe, die nur dann ein ausgeprägtes absolutes Maximum aufweisen, wenn in dem betrachteten Zeit-/Frequenzbereich mindestens ein Ziel vorliegt, andernfalls zeigen die Pegelschriebe einen ausgeglichenen Verlauf.

Die in jedem Dopplerkanal durchgeführte Korrelation zwischen Empfangssignal und Referenzsignal zeigt einen dopplerabhängigen Entfernungsfehler auf. Gemäß der vorteilhaften Weiterbildung des erfindungsgemäßen Verfahrens nach Anspruch 12 wird dieser Entfernungsfehler dadurch korrigiert, daß die Ausgangssignale der Dopplerkanäle um einen Zeitversatz verschoben zur Anzeige gebracht werden, wobei der Zeitversatz abhängig von der Dopplerverschiebung für jeden Dopplerkanal individuell berücksichtigt wird. Die Dopplerverschiebung verursacht einen Frequenzversatz zwischen dem Frequenzverlauf des Referenzsignals und des Sendesignals, so daß um den Zeitversatz verschoben gleiche Frequenzen in den Frequenzverläufen innerhalb eines Zeitraums auftreten, der gleich der Impulslänge abzüglich dem Zeitversatz ist. Dieser Zeitversatz entspricht näherungsweise dem Entfernungsfehler der Ambiguity-Funktion. Der Vorteil der Anzeige dieser korrigierten Ausgangssignale besteht darin, daß Zielstrukturen im Farbschrieb sich besser herausheben, da durch die Berücksichtigung des angenähert bestimmten Entfernungsfehlers gemäß der Weiterbildung nach Anspruch 12 der Rücken der Ambiguity-Funktion von der Zeitachse weg zur Frequenzachse hin gedreht wird, so daß die Anzeige der Ausgangssignale der Dopplerkanäle im Frequenz-Zeitbereich entfernungskorrigiert zur Zielentfernung hin verschoben werden.

Nach der vorteilhaften Weiterbildung des erfindungsgemäßen Verfahrens nach Anspruch 13 werden für alle Werte α dopplerverschobene Referenzsignale berechnet, mit dem Sendesignal korreliert und die Maxima dieser Kreuzkorrelationsfunktionen in Abhängigkeit vom zugehörigen Geschwindigkeitswert abgespeichert oder tabellarisch zusammengefaßt. Der Vorteil besteht darin, daß mit Ausgangssignalen nur weniger Dopplerkanäle als Abtastwerte der Pegelverlauf der Maxima der Ambiguity-Funktionen nachzubilden ist und durch Vergleich die Möglichkeit besteht, die Geschwindigkeit eines Ziels zu bestimmen. Dieses Verfahren ist für einen schnellen Überblick besonders vorteilhaft einsetzbar.

Die Ansprüche 14 und 15 geben vorteilhafte Vorrichtungen zum Ausüben des erfindungsgemäßen Verfahrens an, bei dem entweder Sendesignale in Form von elektromagnetischen Wellen oder von Schallwellen gesendet und ihre reflektierten Anteile empfangen werden.

Bei der vorteilhaften Weiterbildung der erfindungsgemäßen Vorrichtung nach Anspruch 15 wird nur eine sehr geringe Anzahl an Dopplerkanälen in der Empfangsanlage benötigt. In einem Pegelrechner werden die dopplerfrequenzverschobenen Referenzsignale mit dem Sendesignal korreliert und der Verlauf der Maxima der Korrelationsfunktionen abgespeichert. Das über die Richtcharakteristik empfangene Empfangssignal wird in insgesamt beispielsweise drei Dopplerkanäle ausgewertet. Das Korrelationsergebnis wird mit dem Verlauf der abgespeicherten Maxima im Pegelrechner verglichen. Bei Übereinstimmung ist die Geschwindigkeit des Ziels bestimmt. Ein besonderer Vorteil dieser Vorrichtung nach Anspruch 15 besteht in dem geringen Aufwand an Dopplerkanälen je Empfangsrichtung.

Weiterhin ist von Vorteil, daß die Berechnung des Verlaufs der Maxima der Korrelationsfunktion unabhängig von der Sende-Empfangsanlage in einem externen Rechner erfolgen kann. Für vorgebbare Werte α, Impulslängen T und Bandbreiten B als Parameter werden die Verläufe berechnet und abgespeichert.

Besonders vorteilhaft ist es, wenn gemäß Anspruch 16 für eine Sonaranlage die Sendesignale von einer Sendeeinheit abgestrahlt werden, die auf einem Schleppkörper installiert ist, da dieser Schleppkörper abhängig von den Ausbreitungsbedingungen im Wasser in einer entsprechenden Höhe geschleppt werden kann, so daß auch solche U-Boote geortet werden können, die sich in bestimmten Schichtungen des Wassers befinden und sonst durch Schallreflexionen an Schichtgrenzen nicht detektierbar wären. Um mit niedrigen Sendefrequenzen arbeiten zu können, mit denen auch weit entfernte Ziele detektiert und geortet werden können, ist es besonders vorteilhaft, als Empfangsanlage eine Schleppantenne zu verwenden, die vom Wasserfahrzeug nachgeschleppt wird. Diese Schleppantennen zeichnen sich durch eine gute Bündelung ihrer Richtcharakteristiken auch für niedrige Frequenzen aus.

Das erfindungsgemäße Verfahren zum Erkennen bewegter Ziele und/oder Bestimmen ihrer Zieldaten bezüglich Geschwindigkeit und/oder Entfernung ist in einem Ausführungsbeispiel für eine Sende-/Empfangsanlage zum Senden von Sendesignalen in Form eines Blockschaltbildes näher erläutert. Es zeigen:

Fig. 1 ein Diagramm des Verlaufs der Sendefrequenz über der Zeit,

Fig. 2 die Ambiguity-Funktion eines LFM-Impulses nach dem Stand der Technik,

Fig. 3 die Ambiguity-Funktion eines Sendeimpulses nach der Erfindung,

Fig. 4 ein Blockschaltbild einer Sonaranlage,

Fig. 5 Ausschnitt aus einer Anzeige im Blockschaltbild,

Fig. 6 ein Schnittbild der Ambiguity-Funktion nach Fig. 2,

Fig. 7 ein Schnittbild der Ambiguity-Funktion nach Fig. 3,

Fig. 8 Pegelverlauf der Ausgangssignale von Dopplerkanälen in Abhängigkeit vom Wert a,

Fig. 9 Pegelverlauf der Ausgangssignale der Dopplerkanäle in Abhängigkeit von der Impulslänge,

Fig. 10 Pegelverlauf der Ausgangssignale der Dopplerkanäle in Abhängigkeit von der Bandbreite.

Von einer Sonaranlage werden Sendesignale innerhalb einer Impulslänge T mit einem Frequenzverlauf der momentanen Sendefrequenz $f_i$ entsprechend einer irrationalen Funktion ausgesendet und vom Ziel reflektierte Anteile empfangen. Die Sendefrequenz

$$f_i = f_m - \frac{B}{2} + B \left(\frac{t}{T}\right)^\alpha$$

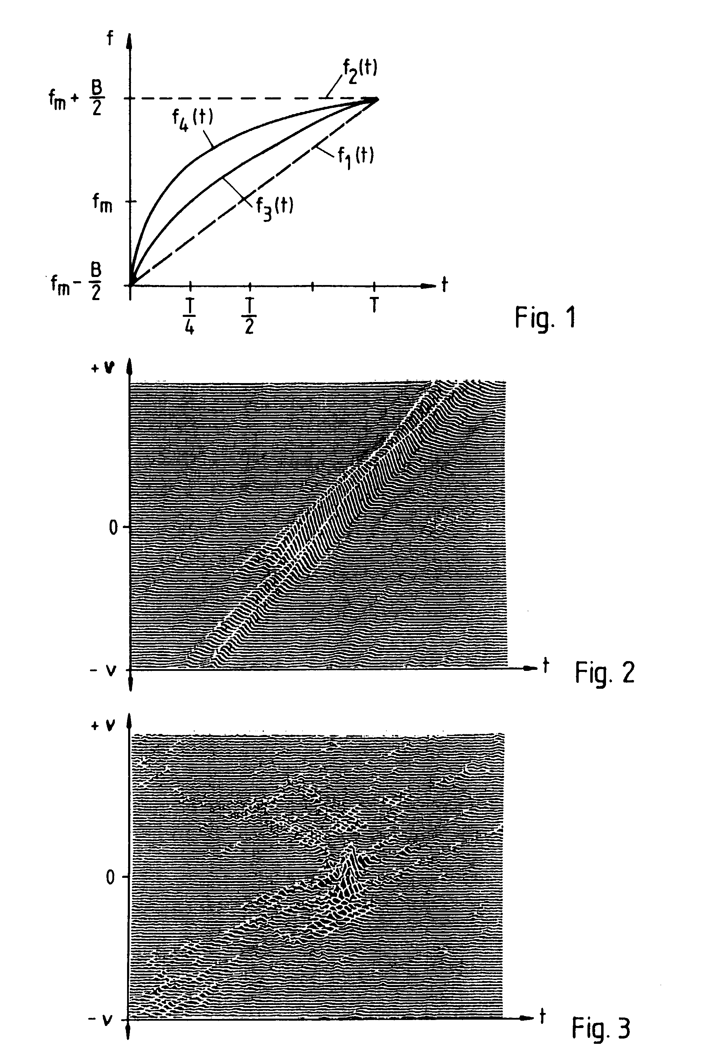

steigt von einer unteren Frequenz $f_m - B/2$ zur Zeit $t = 0$ bis auf eine obere Frequenz $f_m + B/2$ zur Zeit $t = T$, wobei B die maximal zu verarbeitende Bandbreite der Sonaranlage angibt und α der Exponent der Funktion ist und in einem Bereich $1 < \alpha < 0$ alle Werte annehmen kann. In einem Diagramm in Fig. 1 ist der Verlauf der Sendefrequenz $f_i$ für Werte $\alpha = \frac{1}{2}$, $\alpha = \frac{1}{4}$ eingetragen. Die Grenzen des Verlaufs der Sendefrequenz sind durch die Geraden $f_1(t)$, deren Frequenzverlauf einem linear frequenzmodulierten Impuls, LFM-Impuls, entspricht, und $f_2(t)$ gegeben, deren Frequenzverlauf konstant ist und einem CW-Impuls entspricht. Eine Veränderung der Sendefrequenz $f_i$ innerhalb der Impulslänge T entsprechend einer Wurzelfunktion zeigt der Frequenzverlauf $f_3(t)$. Der Exponent der irrationalen Funktion $f_3(t)$ weist den Wert α ) ½ auf. Bei einer Verkleinerung des Wertes auf $\alpha = \frac{1}{4}$ durchläuft die Sendefrequenz $f_i$ den Frequenzverlauf $f_4(t)$. Die Steigung der irrationalen Funktion $f_i(t)$ wird mit kleiner werdendem Wert a im Anfangsbereich des Sendeimpulses immer größer und nimmt mit der Zeit t ab.

Fig. 2 zeigt die Ambiguity-Funktion für einen linear frequenzmodulierten Impuls LFM nach dem Stand der Technik, Fig. 3 für einen nach dem erfindungsgemäßen Verfahren gebildeten Sendeimpuls, dessen Frequenzverlauf $f_3(t)$ der Wurzelfunktion folgt. In einer durch Entfernungsachse R und Geschwindigkeitsachse v aufgespannten Darstellungsebene ist die Messerrückenform der Ambiguity-Funktion des LFM-Impulses deutlich zu erkennen. Ein Vergleich mit Fig. 3 zeigt deutlich, daß im Gegensatz zu dieser bekannten Ambiguity-Funktion des linear frequenzmodulierten Impulses in Fig. 2 die Signalenergie bei einer Impulsform nach der Erfindung gemäß Fig. 3 konzentriert ist und die Ambiguity-Funktion ein wesentlich ausgeprägteres Maximum entsprechend einem Berggipfel aufweist. Eine Entfernungs- und Geschwindigkeitsmessung mit einem Frequenzverlauf $f_3(t)$ innerhalb des Sendeimpulses ist mit größerer Genauigkeit möglich als mit einem LFM-Impuls gleicher Bandbreite und Impulslänge.

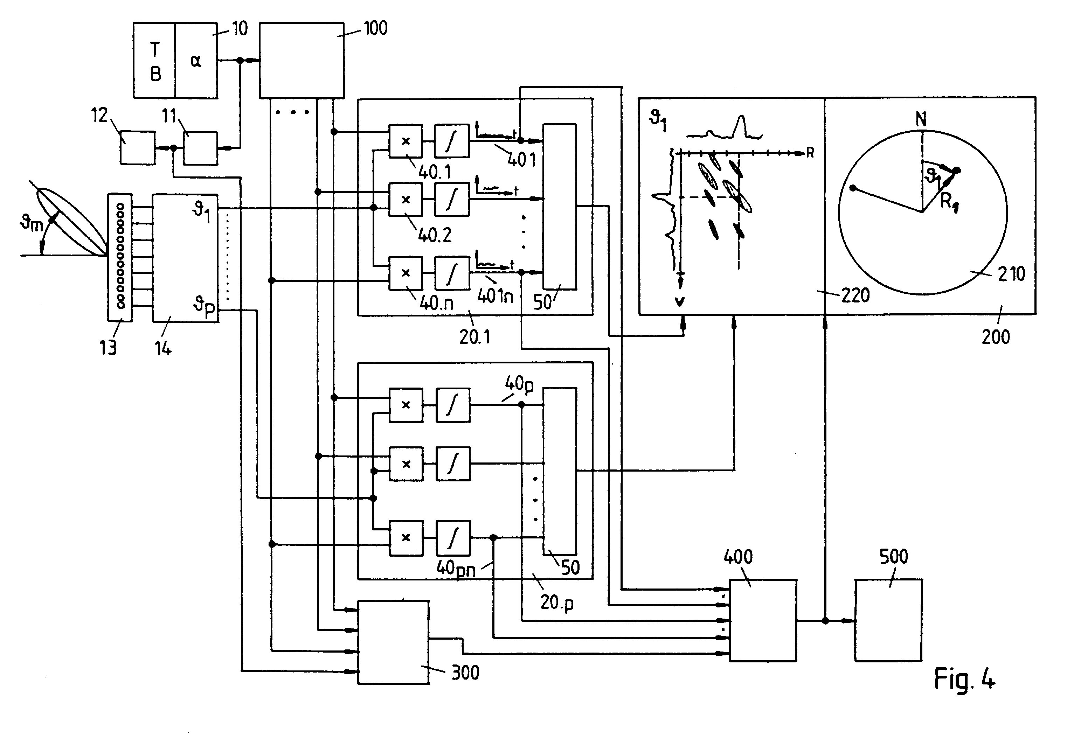

Fig. 4 zeigt ein Blockschaltbild der Sonaranlage zum Senden eines Sendeimpulses, dessen Frequenzverlauf $f_i(t)$ durch den Wert α einstellbar ist, z.B. entsprechend einer im Diagramm nach Fig. 1 gezeigten irrationalen Funktion. Abhängig von der gewünschten Entfernungs- und Geschwindigkeitsauflösung wird ein Wert α in einer Eingabe 10 durch einen Operator zusammen mit der Impulslänge T und Bandbreite B vorgegeben. Die Eingabe 10 steuert einen Sendesignalformer 11 an, der den Sendeimpuls berechnet. Der Sendeimpuls wird von einer Sendeeinheit 12 mit einer Sendeantenne omnidirektional oder richtungsselektiv abgestrahlt. Die Sendeeinheit 12 wird vom Trägerschiff der Sonaranlage in vorgebbarer Tiefe geschleppt. Mit einer Empfangsantenne 13, die als "towed array" ebenfalls vom Trägerschiff nachgeschleppt wird, werden reflektierte Anteile des Sendeimpulses empfangen und einem Richtungsbildner 14 zugeführt. Mit dem Richtungsbildner 14 werden Richtcharakteristiken in vorgebbare Richtungen gebildet und die Empfangssignale der Richtcharakteristiken, die in Winkel $\vartheta_1$ bis $\vartheta_p$ weisen, ausgewertet. Für jede Richtcharakteristik ist eine gleiche Auswerteeinheit 20.1 bis 20.p vorgesehen. Jede Auswerteeinrichung 20.1 ... 20.p enthält n Dopplerkanäle mit Korrelatoren 40.1 ... 40.n zur Auswertung des Empfangssignals bezüglich Geschwindigkeit und Entfernung durch Bilden der Ambiguity-Funktion.

Die Ausgangssignale der Korrelatoren 40 sind die Ausgangssignale der Dopplerkanäle, die einer Auswahleinheit 50 zugeführt werden.

In einem Referenzsignalrechner 100, der mit der Eingabe 10 für den Wert $\alpha$ des Exponenten der irrationalen Funktion $f_i(t)$ verbunden ist, werden Referenzsignale generiert. Das Referenzsignal hat die gleiche Impulslänge T wie das Sendesignal. Der Frequenzverlauf $f_i$ des Referenzsignals ist für ein ruhendes Ziel identisch mit dem des Sendesignals. Bewegte Ziele verursachen eine Frequenzverschiebung im Empfangssignal entsprechend dem Dopplereffekt, die zur Bestimmung der Geschwindigkeit des Ziels in Richtung zum Empfangsort ausgewertet wird. Dazu werden Referenzsignale mit solchen Frequenzverschiebungen versehen, die nach dem Dopplereffekt möglich sind. Da bekannt ist, wie groß die maximale Geschwindigkeit eines gesuchten Zieles sein kann, ist dadurch die größte Frequenzverschiebung vorgegeben, die positiv oder negativ sein kann, abhängig davon, ob das Ziel sich dem Empfangsort nähert oder vom Empfangsort wegfährt. Die Anzahl der Referenzsignale und Dopplerkanäle ist abhängig von der Geschwindigkeitsauflösung. In dem Referenzsignalrechner 100 werden n Referenzsignale mit Frequenzverschiebungen D1 bis Dn berechnet und an die Korrelatoren 40.1 bis 40.n der Dopplerkanäle geschaltet.

Die Auswertung des Empfangssignals jeder Richtcharakteristik wird mit den Referenzsignalen in den Dopplerkanälen im von der Reichweite abhängig vorgebbaren Zeitbereich vorgenommen, indem der zeitliche Verlauf des Empfangssignals mit dem zeitlichen Verlauf des Referenzsignals korreliert wird. Das Korrelationsergebnis ist das Maximum der Ambiguity-Funktion und das Ausgangssignal des Dopplerkanals. Das absolute Maximum sämtlicher Ausgangssignale zeigt den Dopplerkanal an, dessen Referenzsignal die geringste Abweichung in bezug auf Zeit- und Frequenzverschiebung gegenüber dem Empfangssignal aufweist, die Frequenz des Referenzsignals und seine Zeitverschiebung geben die Zieldaten des Ziels an.

Über die Auswahleinheiten 50 in den Auswerteeinheiten 20 werden Ausgangssignale der Dopplerkanäle einer Anzeige 200 zugeführt. Auf einer Lagedarstellung 210 in der Anzeige 200 werden die Empfangssignale der Richtcharakteristiken abhängig von Peilung und Entfernung in Polarkoordinaten dargestellt. Eine Darstellung in kartesischen Koordinaten ist ebenfalls möglich. Die Auswahleinheit 50 jeder Auswerteeinheit 20 schaltet dazu in vorgebbaren Zeiteinheiten das jeweils größte Ausgangssignal ihrer Dopplerkanäle an die Anzeige 20.1. Die Zeiteinheiten werden abhängig von Bandbreite und Entfernungsauflösung gewählt. Da die Richtcharakteristiken im Richtungsbildner 14 zeitparallel gebildet werden, ist jeder Auswerteeinheit 20 eine Peilrichtung $\vartheta$ zugeordnet. Aus der Lagedarstellung 210 können besonders interessierende Zielgebiete mit einem Cursor ausgewählt werden und auf einem zweiten Anzeigefeld 220 in einer Darstellungsebene für einen Entfernungs- und Geschwindigkeitsbereich dargestellt werden. In senkrechter Richtung werden je Zeiteinheit die Ausgangssignale der Dopplerkanäle einer einzigen Auswerteeinheit 20.1 als Farbschrieb dargestellt. Jedem Pegelwert des Ausgangssignals wird eine Farbe zugeordnet, z.B. steigenden Pegelwerten die Farben Violett, Blau, Grün und Gelb. So entsteht ein flächiger Farbschrieb, bei dem nebeneinander je Zeiteinheit die Maxima der Ambiguity-Funktion sämtlicher Dopplerkanäle untereinander dargestellt werden. In der Darstellungsebene bilden sich Höhenlinien gleicher Farbe aus, von denen sich das absolute Maximum markant hervorhebt und mit einem roten Punkt versehen wird.

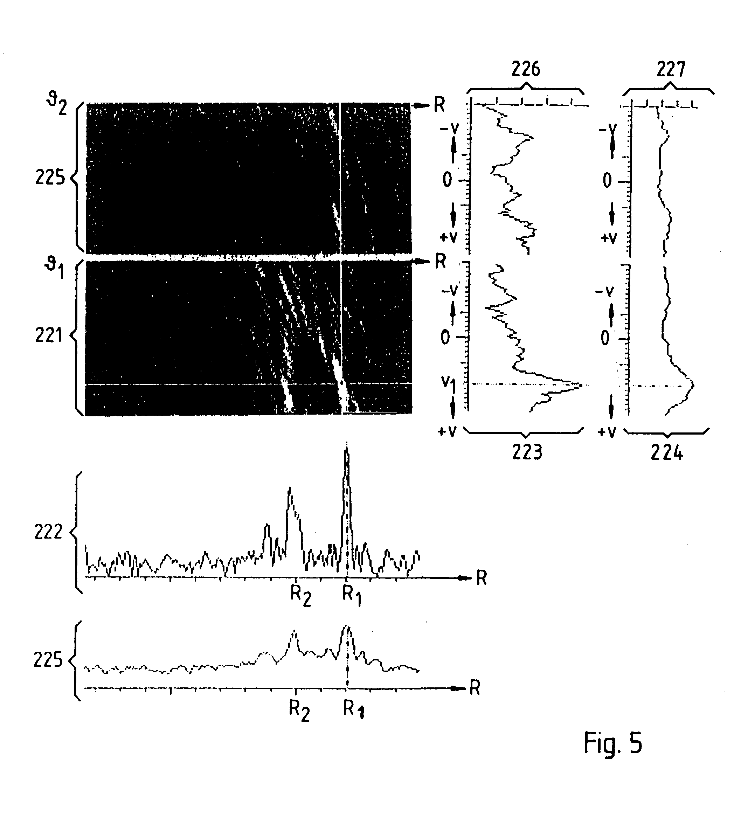

Ein solcher Farbschrieb für einen Entfernungs- und Geschwindigkeitsbereich 221 ist als Schwarz-Weiß-Kopie in Fig. 5 für die Richtung $\vartheta 1$ gezeigt. Man sieht eine typische Zielstruktur, die durch Mehrwegeausbreitungen und unterschiedliche Reflexionszentren entsteht. Zur näheren Untersuchung des Ziels wird entweder mit einem Cursor durch den Betrachter oder durch die Auswahleinheit 50 in der Auswerteeinheit 20.1 festgestellt, in welchem Dopplerkanal das absolute Maximum vorliegt. Ausgangssignale dieses Dopplerkanals werden in ihrem Zeitverlauf parallel zur waagerechten Entfernungsachse R als Pegelschrieb 222 unter dem Bereich 221 angezeigt. Man erkennt bei den Entfernungen R1 und R2 Maxima, das absolute Maximum liegt bei R1.

Rechts vom Bereich 221 wird der zu diesem Zeitpunkt gehörende Pegelverlauf 223 der einzelnen Dopplerkanäle über der Geschwindigkeitsachse $\pm v$ dargestellt. Bei der Geschwindigkeit v1 liegt das absolute Maximum. Das Ziel hat also die Zieldaten $\vartheta 1$, R1 und v1. Die Genauigkeit der Meßergebnisse bezüglich Entfernung $R_1$ und Geschwindigkeit $v_1$ sind der Breite des absoluten Maximums der Pegelverläufe 222 bzw. 223 zu entnehmen.

Aufschluß über Zieldaten und deren Qualität gibt auch der Pegelschrieb 224, bei dem über der Geschwindigkeitsachse $\pm v$ unabhängig von der Entfernung R die absoluten Maxima der Dopplerkanäle im gesamten Bereich 221 aufgezeichnet sind. Auch hier erkennt man, daß das absolute Maximum bei der Geschwindigkeit v1 liegt. Der Pegelschrieb 225 zeigt die absoluten Maxima der Dopplerkanäle in Abhängigkeit von der Entfernung R, unabhängig davon, in welchem Dopplerkanal 40.1 bis 40.n dieses Maximum auftritt. Bei den Entfernungen R1 und R2 sind ausgeprägte Maxima zu erkennen, so daß sich hier die Frage stellt, ob ein zweites Ziel bei der Entfernung R2 vorliegt. In diesem Fall würde man den senkrechten Cursor im Bereich 221 nach links schieben und sich den Verlauf der Ausgangssignale der Dopplerkanäle für diesen Zeitpunkt als Pegelschrieb darstellen lassen.

Im oberen Bereich 225 von Fig. 5 ist für die benachbarte Richtung $\vartheta 2$ für einen gleichen Entfernungs- und Geschwindigkeitsbereich wie im unteren Bereich 221 eine Schwarzweiß-Kopie eines solchen Farbschriebs dargestellt. Auch hier sind wieder Spuren zu erkennen, die auf eine Zielstruktur hindeuten, die beispielsweise zu dem Ziel unter der Peilung $\vartheta 1$ gehören können. Zur näheren Aufklärung wird entsprechend dem senkrecht eingestellten Cursor ein Pegelschrieb 226 angefertigt, bei dem die Ausgangssignale der Dopplerkanäle zu diesem Zeitpunkt über der Geschwindigkeitsachse ±v dargestellt sind. Aus dem Pegelschrieb 226 ist kein absolutes Maximum ableitbar, so daß man davon ausgehen kann, daß hier kein weiteres Ziel vorliegt, sondern die Struktur im Bereich 225 zum unter der Richtung $\vartheta 1$ gepeilten Ziel gehört. Auch der Pegelschrieb 226, bei dem entfernungsunabhängig die größten Maxima in den Dopplerkanälen im betrachteten Zeitraum für die Richtung $\vartheta 2$ angezeigt sind, zeigt kein ausgeprägtes Maximum, so daß sich eine weitere Untersuchung der Ambiguity-Funktionen für die Richtung $\vartheta 2$ sich erübrigt.

Ist eine nähere Aufklärung des Ziels unter der Peilung $\vartheta 1$ in der Entfernung R1 erwünscht, so kann abhängig von der Breite der Maxima in den Pegelschrieben 222 und 223 der nächste Sendeimpuls bezüglich seines Frequenzverlaufs durch Änderungen in der Eingabe 10 variiert werden. Ist eine genauere Geschwindigkeitsauflösung gewünscht, so wird der Wert $\alpha$ des Exponenten verkleinert, ist eine bessere Entfernungsauflösung gewünscht, so wird der Wert $\alpha$ des Exponenten vergrößert. Ebenso ist es möglich, für mehrere aneinandergereihte Impulslängen unterschiedliche Werte $\alpha$ einzugeben, wobei eine der Impulslängen auch einen frequenzkonstanten oder linear frequenzmodulierten Wellenzug enthalten kann.

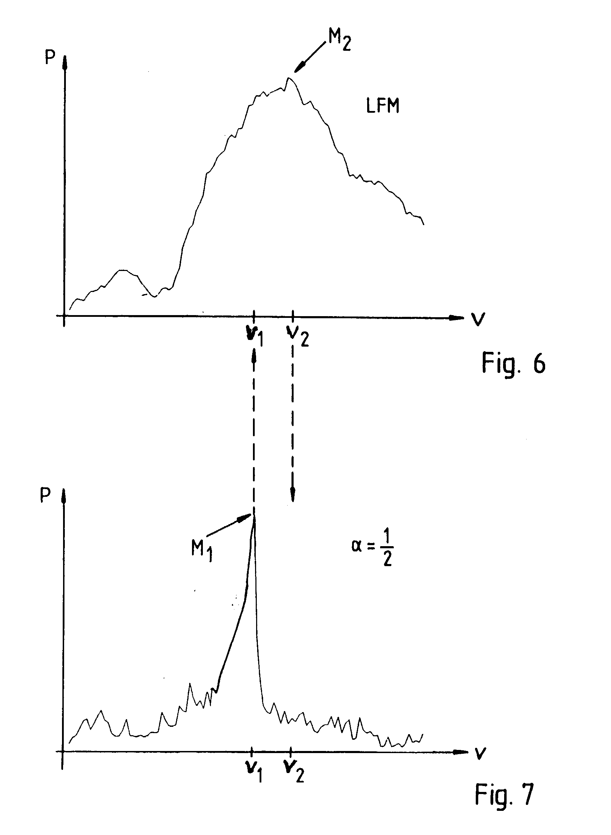

Fig. 6 zeigt einen Verlauf der Maxima der Ambiguity-Funktionen über der Geschwindigkeitsachse v für einen linear frequenzmodulierten Sendeimpuls LFM, Fig. 7 bei gleicher Zielsituation für einen Sendeimpuls, dessen Frequenz mit der Wurzelfunktion ansteigt, der Exponent also den Wert $\alpha = \frac{1}{2}$ aufweist. Man sieht deutlich, daß das absolute Maximum M1 in Fig. 7 wesentlich ausgeprägter und steiler als das absolute Maximum M2 in Fig. 6 ist. Außerdem ist zu erkennen, daß die absoluten Maxima M1 und M2 in unterschiedlichen Dopplerkanälen auftreten, die den Geschwindigkeiten v1 und v2 entsprechen. Dieser Sachverhalt ist dadurch zu erklären, daß beim linear frequenzmodulierten Sendeimpuls LFM die Ambiguity-Funktionen in benachbarten Dopplerkanälen nahezu gleiche Pegel bei der gleichen Zeitverschiebung aufweist und es schwer feststellbar ist, welcher Dopplerkanal die wahre Geschwindigkeit des Ziels angibt. Im Gegensatz dazu ist aus Fig. 7 eindeutig das absolute Maximum erkennbar. Benachbarte Dopplerkanäle weisen bei dem erfindungsgemäß modulierten Sendeimpuls wesentlich geringere Pegel der Maxima der Ambiguity-Funktion auf, so daß zweifelsfrei erkennbar ist, welcher Dopplerkanal die Geschwindigkeit mit dem geringsten Fehler angibt und für die Entfernungsbestimmung benutzt wird.

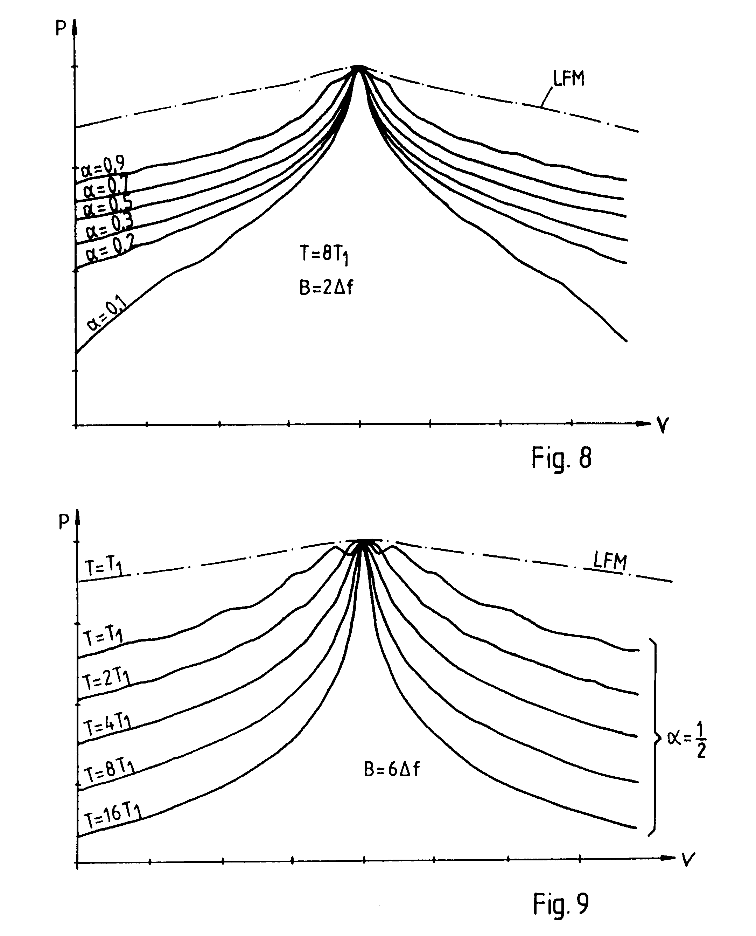

Fig. 8 zeigt den Pegelverlauf der Maxima der Ambiguity-Funktion am Ausgang der Dopplerkanäle für Sendeimpulse, deren Sendefrequenzen irrationalen Funktionen folgen, mit den Werten $\alpha = 0,1$; $\alpha = 0,2$; $\alpha = 0,3$; $\alpha = 0,5$; $\alpha = 0,7$; $\alpha = 0,9$ des Exponenten und für einen linear frequenzmodulierten Sendeimpuls LFM bei gleicher Bandbreite $B = 2f$ und Impulslänge $T = 8T_1$. Das absolute Maximum ist jeweils deutlich zu erkennen, da die Maxima in den benachbarten Dopplerkanälen wesentlich kleiner sind, während für den LFM-Impuls eine wesentlich schwächere Abnahme der Maxima zu erkennen ist. Für kleinere Werte $\alpha$ nimmt die Dopplerempfindlichkeit zu, d.h. daß absolute Maximum, das den Dopplerkanal zur Geschwindigkeitsbestimmung charakterisiert, hebt sich steiler heraus.

Fig. 9 zeigt den Pegelverlauf der Maxima der Ambiguity-Funktion mit einer starken Erhöhung der Dopplerempfindlichkeit für Sendeimpulse mit gleichem Frequenzverlauf $f_3(t)$ der Sendefrequenz $f_i$ mit dem Wert $\alpha = \frac{1}{2}$, aber unterschiedlichen Impulslängen $T=T_1$, $T=2T_1$, $T=4T_1$, $T=8T_1$ und $T=16T_1$. Zum Vergleich ist strichpunktiert der Pegelverlauf für einen linear frequenzmodulierten Sendeimpuls LFM der Impulslänge $T_1$ angegeben. Schon bei kleinen Impulslängen zeigt sich deutlich die erhöhte Dopplerempfindlichkeit gegenüber dem LFM-Impuls, die bei größeren Impulslängen zunimmt, so daß Ziele im Nahbereich, aber auch bei großen Reichweiten sicher erkannt und klassifiziert werden können. Ein weiterer Vorteil besteht darin, daß auch schon bei kurzen Impulsen eine eindeutige Geschwindigkeitsbestimmung möglich ist, deren Fehler dann um so kleiner wird, je kleiner man den Wert $\alpha$ des Exponenten für den nächsten Sendeimpuls wählt.

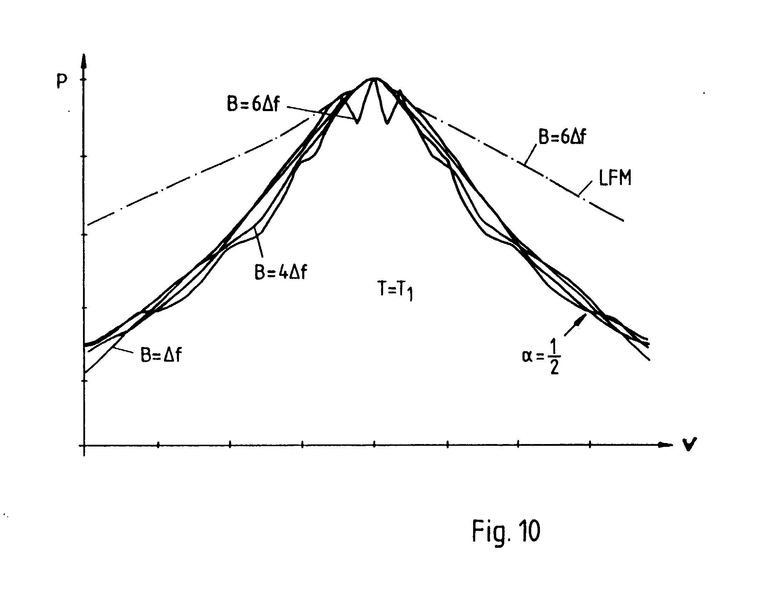

Fig. 10 zeigt bei den Pegelverläufen den Einfluß der gewählten Bandbreite $B=\Delta f$, $B=4\cdot\Delta f$, $B=6\cdot\Delta f$ auf die Dopplerempfindlichkeit für Sendeimpulse mit dem Wert $\alpha=\frac{1}{2}$ und zum Vergleich strichpunktiert für einen LFM-Sendeimpuls. Man sieht, daß die Bandbreite B keinen wesentlichen Einfluß hat, so daß die Bandbreite B abhängig vom Nachhall unabhängig von der Entfernungsauflösung frei gewählt werden kann.

Pegelverläufe gemäß den Fig. 8, 9 und 10 werden in einem Pegelrechner 300 der Sonaranlage gemäß Blockschaltbild in Fig. 4 oder in einem externen Rechner durch Korrelation der dopplerverschobenen Referenzsignale mit dem Sendesignal berechnet und mit Geschwindigkeitswerten, die den Dopplerfrequenzverschiebungen entsprechen, abgespeichert. Der Pegelrechner 300 ist eingangsseitig mit dem Referenzsignalrechner 100 und dem Sendesignalformer 11 und ausgangsseitig mit einer Vergleichsanordnung 400 verbunden. Der Ausgang 401, ..., 40p des Dopplerkanals in der Auswerteeinheiten 20.1, ...n 20.p, der als Referenzsignal das Dopplernullsignal, also das Sendesignal, aufweist, und drei weitere Ausgänge 401n, ..., 40pn sind mit der Vergleichsanordnung 400 ebenfalls zusammengeschaltet, in der aus den Ausgangssignalen dieser Dopplerkanäle der Pegelverlauf durch Interpolation gewonnen wird und mit den Pegelverläufen im Pegelrechner 300 verglichen wird. Bei Übereinstimmung ist die Geschwindigkeit des Ziels bestimmt. Das Ergebnis wird in einer Zieldatenanzeige 500 numerisch oder als Farbwert in der PPI-Darstellung 210 auf dem unter der zugehörigen Peilung und Entfernung angezeigten Zielpunkt angezeigt.

**Patentansprüche**

1. Verfahren zum Erkennen ruhender und bewegter Ziele und/oder Bestimmen ihrer Zieldaten bezüglich Geschwindigkeit und/oder Entfernung, bei dem Sendesignale mit frequenzmodulierten Wellen innerhalb vorgebbarer Impulslängen ausgesendet und empfangen werden und Empfangssignale durch Bilden der Ambiguityfunktion ausgewertet werden, dadurch gekennzeichnet, daß Bandbreite und Impulslänge vorgegeben und nicht verändert werden, daß die Sendefrequenz während der Impulslänge innerhalb der gesamten Bandbreite entsprechend einer irrationalen Funktion der form $t^\alpha$ über der Zeit ansteigend oder abfallend variiert wird und daß der Wert des Exponenten $\alpha$ der irrationalen Funktion größer "Null" und kleiner "Eins" gewählt wird, daß mit dem Wert des Exponenten die Dopplerempfindlichkeit eingestellt wird und daß der Wert während der gesamten Impulslänge nicht verändert wird.

2. Verfahren nach Anspruch 1, dadurch gekennzeichnet, daß das Sendesignal aus mehreren aneinandergereihten Impulslängen besteht und daß die Sendefrequenz (f) während mindestens einer der Impulslängen (T) innerhalb der Bandbreite (B) konstant und/oder linear ansteigend oder abfallend gewählt wird.

3. Verfahren nach Anspruch 1 oder 2, dadurch gekennzeichnet, daß ausgewählte Geschwindigkeitsbereiche vorgegeben werden und der Wert $\alpha$ um so mehr von 1 abweichend gewählt wird, desto kleiner der Geschwindigkeitsbereich ist.

4. Verfahren nach einem der Ansprüche 1 bis 3, dadurch gekennzeichnet, daß Reichweiten vorgegeben werden und der Wert $\alpha$ des Exponenten abhängig von der mit Reichweitenvergrößerung wachsenden Impulslänge (T) größer gewählt wird.

5. Verfahren nach einem der Ansprüche 1 bis 4, dadurch gekennzeichnet, daß zur Auswertung des Empfangssignals unabhängig vom gewählten Wert $\alpha$ eine Anzahl von Dopplerkanälen mit Korrelatoren (40) verwendet wird, daß für jeden wählbaren Wert $\alpha$ eine gleiche Anzahl von gegenüber dem Sendesignal dopplerfrequenzverschobenen Referenzsignalen berechnet und abgespeichert wird, daß die Referenzsignale den Korrelatoren (40) zugeführt werden, daß in jedem Dopplerkanal die Ambiguity-Funktion berechnet und ihr Maximum als Ausgangssignal des Dopplerkanals in Abhängigkeit von der Zeit abgespeichert und/oder dargestellt wird.

6. Verfahren nach Anspruch 5, dadurch gekennzeichnet, daß für mindestens ein auswählbares Empfangssignal der Pegelverlauf der Maxima der Ambiguity-Funktionen an den Ausgängen der Dopplerkanäle in Abhängigkeit von der Zeit in einem vorgebbaren Frequenz- und Zeitbereich (221, 225) farbig in einer durch Geschwindigkeits- und Entfernungsachse (v, R) aufgespannten Darstellungsebene angezeigt wird, wobei jedem Pegelwert eine Farbe zugeordnet wird.

7. Verfahren nach Anspruch 6, dadurch gekennzeichnet, daß die Auswahl des Empfangssignals und des Zeitbereichs mit einem Cursor in einer Lagedarstellung (210), in der Ziele bezüglich Peilung und Entfernung angezeigt werden, erfolgt, wobei die Lagedarstellung (210) von den Empfangssignalen angesteuert wird und jedem Empfangssignal eine Einfallsrichtung ($\vartheta$), die der Peilung zum Ziel entspricht, und eine Zeit zwischen Senden und Empfangen zugeordnet sind, die der Entfernung (R) zum Ziel entspricht.

8. Verfahren nach Anspruch 6 oder 7, dadurch gekennzeichnet, daß bei Auftreten des absoluten Maximums der Ambiguity-Funktionen in einem der Dopplerkanäle der momentane Pegelverlauf der Maxima aller Dopplerkanäle parallel zur Geschwindigkeitsachse (v) der Darstellungsebene (Pegelschrieb 223, 226) angezeigt wird.

9. Verfahren nach einem der Ansprüche 6 bis 8, dadurch gekennzeichnet, daß der zeitliche Verlauf der Ambiguity-Funktion am Ausgang des Dopplerkanals mit dem absoluten Maximum über der Zeit parallel zur Entfernungsachse (R) der Darstellungsebene (Pegelschrieb 222) angezeigt wird.

10. Verfahren nach einem der Ansprüche 6 bis 9, dadurch gekennzeichnet, daß im vorgegebenen Frequenz- und Zeitbereich (221, 225) unabhängig von der Entfernung (R) parallel zur Geschwindigkeitsachse (v) das jeweils größte Ausgangssignal jedes Dopplerkanals als Pegelschrieb (224, 227) angezeigt wird.

11. Verfahren nach einem der Ansprüche 6 bis 10, dadurch gekennzeichnet, daß im vorgegebenen Frequenz- und Zeitbereich (221, 225) unabhängig vom Dopplerkanal parallel zur Entfernungsachse (R) das jeweils größte von allen Ausgangssignalen der Dopplerkanäle über der Zeit als Pegelschrieb angezeigt wird.

12. Verfahren nach einem der Ansprüche 6 bis 9, dadurch gekennzeichnet, daß für jeden Dopplerkanal über den gesamten Zeitbereich die abgespeicherten Ausgangssignale um einen Zeitversatz verschoben ausgelesen und angezeigt werden, daß der Zeitversatz aus der zu dem jeweiligen Dopplerkanal gehörenden Dopplerverschiebung ermittelt wird und gleich dem Zeitversatz ist, zu dem die dopplerverschobene Frequenz im Frequenzverlauf des Sendesignals auftritt.

13. Verfahren nach einem der Ansprüche 1 bis 12, dadurch gekennzeichnet, daß für alle wählbaren Werte α der Pegelverlauf der Maxima der Korrelationsfunktion der gegenüber dem Sendesignal dopplerfrequenzverschobenen Referenzsignale mit dem Sendesignal berechnet und in Abhängigkeit von Geschwindigkeitswerten abgespeichert wird, daß momentane Ausgangssignale von mindestens drei Dopplerkanälen Abtastwerte eines Pegelverlaufs zum Vergleich bilden, wobei bei Übereinstimmung Geschwindigkeit und Entfernung des Ziels bestimmt sind.

14. Vorrichtung zum Ausüben der Verfahren nach Anspruch 1 bis 13 unter Verwendung einer Sende-Empfangsanlage, bestehend aus einer Sendeeinheit mit Sendeantenne und einer Empfangseinheit mit Empfangsantenne, Richtungsbildner zum Bilden von Richtcharakteristiken und Dopplerkanälen für das Empfangssignal jeder Richtcharakteristik, die mit dem Richtungsbildner verbunden sind, dadurch gekennzeichnet, daß eine Eingabe (10) für den Wert α des Exponenten, eine oder mehrere Impulslängen (T) und Bandbreite (B) mit einem Referenzsignalrechner (100) zum Berechnen dopplerfrequenzverschobener Referenzsignale und einem Sendesignalformer (11), dem die Sendeeinheit (12) nachgeschaltet ist, verbunden ist, daß der Referenzsignalrechner (100) Ausgänge für die dopplerverschobenen Referenzsignale aufweist, die mit Korrelatoren in den Dopplerkanälen verbunden sind, daß die Ausgänge der Dopplerkanäle mit einer Anzeige (200) verbunden sind.

15. Vorrichtung nach Anspruch 14, dadurch gekennzeichnet, daß ein Pegelrechner (300) mit dem Referenzsignalrechner (100) und dem Sendesignalformer (11) verbunden ist zum Berechnen des Verlaufs der Maxima der Korrelationsfunktionen von Sendesignal und dopplerfrequenzverschobenen Referenzsignalen und zum Abspeichern der Pegelverläufe in Abhängigkeit von den Dopplerfrequenzverschiebungen entsprechenden Geschwindigkeitswerten, daß dem Pegelrechner (300) eine Vergleichsanordnung (400) nachgeschaltet ist, die mit mindestens drei Dopplerkanälen für das auszuwertende Empfangssignal verbunden ist, und daß der Vergleichsanordnung (400) eine Zieldatenanzeige (500) nachgeschaltet ist.

16. Vorrichtung nach Anspruch 14 oder 15 für eine Wasserschallortungsanlage auf einem Wasserfahrzeug, dadurch gekennzeichnet, daß die Sendeeinheit (12) mit Sendeantenne in einem Schleppkörper installiert ist, der von dem Wasserfahrzeug nachgeschleppt wird, daß die Sendeantenne rundum oder in vorgebbare Senderichtungen das Sendesignal in Form von Schallwellen abstrahlt, daß die Empfangsantenne (13) der Empfangseinheit als Schleppantenne ausgebildet ist, die vom Wasserfahrzeug ausbringbar und nachschleppbar ist, daß die Empfangseinheit auf dem Wasserfahrzeug untergebracht ist und über Kabel mit der Empfangsantenne verbunden ist.

**Claims**

1. Method for recognising stationary and moving targets and/or determining their target data with respect to speed and/or distance, in which transmission signals with frequencymodulated waves within predeterminable pulse lengths are transmitted and received, and received signals are evaluated by forming the ambiguity function, characterised in that band width and pulse length are predetermined and are not changed, that the transmission frequency is varied during the pulse length within the entire band width to rise or fall over time corresponding to an irrational function in the form $t^\alpha$, and that the value of the exponent α of the irrational function is selected to be greater than "zero" and smaller than "one", that the Doppler sensitivity is adjusted with the value of the exponent, and that the value is not changed during the entire pulse length.

**2.** Method according to Claim 1, characterised in that the transmission signal comprises several aligned pulse lengths, and that the transmission frequency (f) is selected to rise or fall constantly and/or linearly during at least one of the pulse lengths (T) within the band width (B).

**3.** Method according to Claim 1 or 2, characterised in that selected speed ranges are predetermined and the value $\alpha$ is selected to deviate further from 1, the smaller the speed range.

**4.** Method according to one of Claims 1 to 3, characterised in that ranges are predetermined and the value $\alpha$ of the exponent is selected to be higher dependent upon the pulse length (T) increasing with the increase in range.

**5.** Method according to one of Claims 1 to 4, characterised in that a number of Doppler channels with correlators (40) is used for evaluation of the received signal independently of the selected value $\alpha$, that an equal number of reference signals shifted in Doppler frequency in relation to the transmission signal is calculated for each selectable value $\alpha$, that the reference signals are fed to the correlators (40), that the ambiguity function is calculated in each Doppler channel and its maximum stored and/or displayed as output signal of the Doppler channel dependent upon time.

**6.** Method according to Claim 5, characterised in that for at least one selectable received signal, the level curve of the maxima of the ambiguity functions is displayed at the outputs of the Doppler channels dependent upon time in a predeterminable frequency and time range (221, 225) in colour in a display plane spanned by the speed and distance axis (v, R), whereby each level value is allocated a colour.

**7.** Method according to Claim 6, characterised in that the selection of the received signal and the time range is displayed with a cursor in a position display (210), in which targets are displayed with respect to bearing and distance, whereby the position display (210) is activated by the received signals and each received signal is allocated a direction of incidence ($\vartheta$), which corresponds to the bearing to the target, and a time between transmitting and receiving, which corresponds to the distance (R) to the target.

**8.** Method according to Claim 6 or 7, characterised in that when the absolute maximum of the ambiguity functions occurs in one of the Doppler channels, the instantaneous level curve of the maxima of all Doppler channels is displayed parallel to the speed axis (v) of the display plane (level trace 223, 226).

**9.** Method according to one of Claims 6 to 8, characterised in that the time curve of the ambiguity function is displayed at the output of the Doppler channel with the absolute maximum over time parallel to the distance axis (R) of the display plane (level trace 222).

**10.** Method according to one of Claims 6 to 9, characterised in that in the predetermined frequency and time range (221, 225), the respective highest output signal of each Doppler channel is displayed as level trace (224, 227) parallel to the speed axis (v) independently of the distance (R).

**11.** Method according to one of Claims 6 to 10, characterised in that in the predetermined frequency and time range (221, 225), the respective highest of all the output signals of the Doppler channels is displayed as level trace over time independently of the Doppler channel parallel to the distance axis (R).

**12.** Method according to one of Claims 6 to 9, characterised in that the stored output signals, shifted by one time displacement, are read out and displayed for each Doppler channel over the entire target range, that the time displacement is determined from the Doppler shift belonging to the respective Doppler channel and is equal to the time displacement, at which the Doppler-shifted frequency occurs in the frequency curve of the transmission signal.

**13.** Method according to one of Claims 1 to 12, characterised in that for all selectable values $\alpha$ the level curve of the maxima of the correlation function of the reference signals shifted in Doppler frequency in relation to the transmission signal is calculated with the transmission signal and stored in dependence upon the speed values, that instantaneous output signals of at least three Doppler channels form scanned values of a level curve for comparison, whereby the speed and distance of the target are determined upon conformity.

**14.** Device for performing the method according to Claims 1 to 13, using a transmitter-receiver system comprising a transmitter unit with transmitting antenna and a receiver unit with receiving antenna, direction display means for forming directional characteristics and Doppler channels connected to the direction display means for the received signal of each directional characteristic, characterised in that an input (10) for the value $\alpha$ of the exponent, one or more pulse lengths (T) and band width (B) is connected to a reference signal computer (100) for calculation of reference signals shifted in Doppler frequency and to a transmission signal conditioning means (11) with the transmitter unit (12) connected downline thereof, that the reference signal computer (100) has outputs for the Doppler-shifted reference signals, which are connected to correlators in the Doppler channels, that the outputs of the Doppler channels are connected to a display (200).

15. Device according to Claim 14, characterised in that a level computer (300) is connected to the reference signal computer (100) and the transmission signal conditioning means (11) for calculation of the curve of the maxima of the correlation functions of the transmission signal and the reference signals shifted in Doppler frequency and for storing the level curves in dependence upon speed values corresponding to the Doppler frequency shifts, that a comparator arrangement (400) is connected downline of the level computer (300) and is connected to at least three Doppler channels for the received signal to be evaluated, and that a target data display (500) is connected downline of the comparator arrangement (400).

16. Device according to Claim 14 or 15 for an underwater sonic tracking system on a watercraft, characterised in that the transmitter unit (12) with transmitting antenna is installed in a towed unit which is towed by the watercraft, that the transmitting antenna radiates the transmission signal in the form of sound waves all around or in predeterminable transmission directions, that the receiving antenna (13) of the receiver unit is constructed as a trailing antenna, which may be put out and towed by the watercraft and is connected to the receiving antenna via cables.

**Revendications**

1. Procédé pour identifier des cibles fixes et mobiles et/ou déterminer leurs données de cible relativement à la vitesse et/ou à la distance, dans lequel des signaux d'émission avec des ondes modulées en fréquence pendant des durées prédéterminées d'impulsion sont émis et reçus, et des signaux reçus sont évalués au moyen d'une formation de la fonction d'ambiguïté, caractérisé en ce que la largeur de bande et la durée d'impulsion sont prédéterminées et ne varient pas, que la fréquence d'émission varie en augmentant ou en diminuant avec le temps pendant la durée d'impulsion à l'intérieur de la totalité de la largeur de bande selon une fonction irrationnelle de la forme $t^\alpha$, et que la valeur de l'exposant $\alpha$ de la fonction irrationnelle est choisie plus grande que zéro et inférieure à un, que la sensibilité Doppler est réglée par la valeur de l'exposant et que la valeur n'est pas modifiée pendant toute la durée d'impulsion.

2. Procédé selon la revendication 1, caractérisé en ce que le signal d'émission consiste en plusieurs durées successives d'impulsion et que la fréquence d'émission (f) est choisie constante et/ou croissant ou décroissant linéairement pendant au moins une des durées d'impulsion (T) à l'intérieur de la largeur de bande (B).

3. Procédé selon la revendication 1 ou 2, caractérisé en ce que des domaines sélectionnés de vitesse sont prédéterminés et que la valeur $\alpha$ est choisie d'autant plus éloignée de "1" que le domaine de vitesse est plus petit.

4. Procédé selon l'une des revendications 1 à 3, caractérisé en ce que des portées sont prédéterminées et que la valeur $\alpha$ de l'exposant est choisie plus grande en fonction de la durée d'impulsion (T) croissant avec l'augmentation de portée.

5. Procédé selon l'une des revendications 1 à 4, caractérisé en ce que pour évaluer le signal reçu indépendamment de la valeur $\alpha$ choisie, un nombre de voies Doppler sont utilisées avec des corrélateurs (40), que pour chaque valeur $\alpha$ pouvant être choisie un nombre égal de signaux de référence décalés en fréquence par effet Doppler par rapport au signal émis sont calculés et stockés, que les signaux de référence sont envoyés aux corrélateurs (40), que dans chaque voie Doppler la fonction d'ambiguïté est calculée et son maximum est stocké et/ou affiché comme signal de sortie de la voie Doppler en fonction du temps.

6. Procédé selon la revendication 5, caractérisé en ce que pour au moins un signal reçu pouvant être sélectionné la variation de niveau des maximums de la fonction d'ambiguïté aux sorties des voies Doppler est affichée en couleurs en fonction du temps dans un domaine prédéterminé de fréquence et de temps (221, 225) dans un plan de représentation défini par des axes de vitesse et de distance (v, R), afin qu'à chaque valeur de niveau une couleur soit affectée.

7. Procédé selon la revendication 6, caractérisé en ce que la sélection du signal reçu et du domaine de temps a lieu avec un curseur dans une représentation de situation (210) dans laquelle des cibles sont affichées relativement à leur relèvement et leur distance, afin que la représentation de situation (210) soit effectuée à partir des signaux reçus et qu'à chaque signal reçu soient affectées une direction de propagation ($\vartheta$) qui correspond à un relèvement de la cible et une durée entre une émission et une réception qui correspond à la distance (R) de la cible.

8. Procédé selon la revendication 6 ou 7, caractérisé en ce que lors d'une apparition du maximum absolu de la fonction d'ambiguïté dans une des voies Doppler, la variation instantanée de niveau des maximums de toutes les voies Doppler est affichée parallèlement à l'axe des vitesses (v) du plan de représentation (tracé de niveau 223, 226).

9. Procédé selon l'une des revendications 6 à 8, caractérisé en ce que la variation dans le temps de la fonction d'ambiguïté à la sortie de la voie Doppler ayant le maximum absolu avec le temps est affichée parallèlement à l'axe des distances (R) du plan de représentation (tracé de niveau 222).

10. Procédé selon l'une des revendications 6 à 9, caractérisé en ce que dans le domaine prédéterminé de fréquence et de temps (221, 225), le plus grand signal de sortie de chaque voie Doppler est affiché chaque fois comme tracé de niveau (224, 227) parallèlement à l'axe des vitesses (v) indépendamment de la distance (R).

11. Procédé selon l'une des revendications 6 à 10, caractérisé en ce que dans le domaine prédéterminé de fréquence et de temps (221, 225) le plus grand de tous les signaux de sortie est affiché à chaque fois comme tracé de niveau parallèlement à l'axe des distances (R) indépendamment de la voie Doppler.

12. Procédé selon l'une des revendications 6 à 9, caractérisé en ce que, pour chaque voie Doppler sur tout le domaine de temps, les signaux stockés de sortie sont recueillis et affichés décalés d'un intervalle de temps, que l'intervalle de temps est déterminé à partir du décalage correspondant à chaque voie Doppler et est égal à l'intervalle de temps auquel la fréquence décalée par effet Doppler apparaît dans la variation de fréquence du signal émis.

13. Procédé selon l'une des revendications 1 à 12, caractérisé en ce que pour toutes les valeurs pouvant être choisies de $\alpha$, la variation de niveau des maximums de la fonction de corrélation des signaux de référence décalés en fréquence par effet Doppler par rapport au signal émis est calculée avec le signal émis et stockée en fonction de valeurs de vitesse, que des signaux instantanés de sortie d'au moins trois voies Doppler constituent des valeurs d'échantillon d'une évolution de niveau pour une comparaison, afin que lors d'une concordance la vitesse et la distance de la cible soient déterminées.

14. Dispositif pour mettre en oeuvre le procédé selon les revendications 1 à 13 lors d'une utilisation d'une installation d'émission-réception, consistant en un module d'émission avec une antenne d'émission et un module de réception avec une antenne de réception, un dispositif de détermination de direction pour déterminer des caractéristiques de direction, et des voies Doppler pour le signal reçu de chaque caractéristique de direction qui sont reliées au dispositifs de détermination de direction, caractérisé en ce qu'une entrée (10) de la valeur $\alpha$ de l'exposant, d'une ou plusieurs durées d'impulsion (T) et d'une largeur de bande (B) est reliée à un calculateur de signaux de référence (100) pour calculer des signaux de référence décalés en fréquence par effet Doppler, et à un dispositif de mise en forme de signaux émis (11) qui est branché après le module d'émission (12), que le calculateur de signaux de référence (100) présente des sorties pour les signaux de référence décalés par effet Doppler qui sont reliées à des corrélateurs dans les voies Doppler, que les sorties des voies Doppler sont reliées à un dispositif d'affichage (200).

15. Dispositif selon la revendication 14, caractérisé en ce qu'un calculateur de niveau (300) est relié au calculateur de signaux de référence (100) et au dispositif de mise en forme de signaux émis (11) pour calculer la variation des maximums des fonctions de corrélation du signal émis et des signaux de référence décalés en fréquence par effet Doppler, et pour stocker les variations de niveau en fonction des valeurs de vitesse correspondant à des décalages de fréquence par effet Doppler, que le calculateur de niveau (300) est branché après un dispositif de comparaison (400) qui est relié au moins à trois voies Doppler pour le signal reçu à évaluer, et que le dispositif de comparaison (400) est branché après un dispositif d'affichage de données de cible (500).

16. Dispositif selon la revendication 14 ou 15 pour une installation de sonar sur un navire, caractérisé en ce que le module d'émission (12) est installé avec une antenne d'émission dans une remorque flottante qui est tirée par le navire, que l'antenne d'émission diffuse le signal émis tout autour ou dans des directions prédéterminées d'émission sous forme d'ondes ultrasonores, que l'antenne de réception (13) du module de réception est constituée sous la forme d'une antenne remorquée qui peut être déployée et remorquée par le navire, que le module de réception est installé sur le navire et est relié par un câble à l'antenne de réception.

Fig. 1

Fig. 2

Fig. 3

Fig. 4

EP 0 625 715 B1

Fig. 5

P

M₂

LFM

V

v₁  v₂

Fig. 6

P

M₁

$\alpha = \frac{1}{2}$

V

v₁  v₂

Fig. 7

Fig. 8

Fig. 9

Fig. 10